**Europäisches Patentamt**

**European Patent Office**

**Office européen des brevets**

(19)

(11) Veröffentlichungsnummer : **0 138 799**
**B1**

(12) # EUROPÄISCHE PATENTSCHRIFT

(45) Veröffentlichungstag der Patentschrift :
09.09.87

(51) Int. Cl.⁴ : **B 60 P 3/055**

(21) Anmeldenummer : **84890152.6**

(22) Anmeldetag : **13.08.84**

(54) Einrichtung zum Transport von Gasflaschen auf Lastfahrzeugen.

(30) Priorität : **26.08.83 AT 3062/83**
**16.01.84 AT 128/84**

(43) Veröffentlichungstag der Anmeldung :
**24.04.85 Patentblatt 85/17**

(45) Bekanntmachung des Hinweises auf die Patenterteilung : **09.09.87 Patentblatt 87/37**

(84) Benannte Vertragsstaaten :
**AT BE DE FR GB IT NL SE**

(56) Entgegenhaltungen :
**DE-A- 2 924 953**
**DE-U- 1 948 749**
**US-A- 2 380 562**
**US-A- 2 761 397**
**US-A- 3 479 043**

(73) Patentinhaber : **Zeibig, Ernst, DDipl.-Ing. Dr. techn.**
**Kreindlgasse 4**
**A-1190 Wien (AT)**

(72) Erfinder : **Zeibig, Ernst, DDipl.-Ing. Dr. techn.**
**Kreindlgasse 4**
**A-1190 Wien (AT)**

(74) Vertreter : **Rippel, Andreas, Dipl.-Ing.**
**Maxingstrasse 34**
**A-1130 Wien (AT)**

## Beschreibung

Die Erfindung bezieht sich auf eine Einrichtung zum Transport von Gasflaschen auf Lastfahrzeugen, bei der die Gasflaschen zu mindestens einem Bündel zusammengefaßt sind, sowie die Füll- bzw. Auslaßöffnungen der Gasflaschen über Verbindungsleitungen verbunden sind.

Derartige Einrichtungen werden zum Transport von Gasen unter hohem Druck verwendet, bei denen ein Transport in Tankfahrzeugen wegen der erforderlichen Dicke des Tanks praktisch nicht mehr in Frage kommt.

Bei bekannten Einrichtungen zum Transport von Gasflaschen wird auf das Fahrgestell ein Hilfsrahmen mit einer Ladefläche gebaut. Auf diese Ladefläche wird ein Bündelgestell mit Flaschen gesetzt. Die Bündelgestelle sind meist aus Profilen gebildete Rahmen, in denen die Gasflaschen neben- und/oder übereinander liegen. Nachteilig bei den bekannten Einrichtungen ist deren verhältnismässig hohes Eigengewicht, das aus der Verwendung eines Hilfsrahmens, eines Plateaus und dem massiven Aufbau der Bündelgestelle resultiert.

Aus der DE-A-2 924 953 ist es bekannt, Gasflaschen auf einer Ladefläche mittels Kabeln zu befestigen, die ein Flaschenbündel umschlingen und über elastische Spannorgane mit der Ladefläche verbunden sind. Über die Halterung der Flaschenhälse bzw. Ausbildung eventueller Verbindungsleitungen der über 10 m langen Flaschen wird in der Vorveröffentlichung nichts ausgesagt.

In der US-A-2 761 397 ist ein Trailer zur Beförderung von Gasflaschen beschrieben, der mit dem Oberbegriff des Anspruchs 1 übereinstimmt und bei dem die an den Flaschen beidseitig angeordneten Hälse zwischen U-Eisen gehalten werden. Bei dieser bekannten Anordnung liegen die Flaschen im Abstand voneinander, die Halterung erfolgt im wesentlichen nur durch die U-Eisen, so daß diese mit den zugehörigen Verbindungsstücken sehr kräftig und damit schwer ausgebildet sein müssen.

Die Erfindung hat es sich zum Ziel gesetzt eine Einrichtung zu schaffen, die wesentlich leichter als die bekannten Einrichtungen ist und die darüber hinaus billiger ist.

Erreicht wird dieses Ziel, ausgehend von einer Einrichtung der eingangs genannten Art dadurch, daß die Flaschen des Bündels mittels umlaufenden flexiblen Spannorganen verspannt sind, und daß die Flaschenhälse durch Öffnungen eines mehreren Flaschen zugeordneten Verbindungsstückes mit rinnenförmigem Querschnitt ragen und durch Muttern, Keile od. dgl. in der Rinne bzw. den Rinnen befestigt sind. Durch die erfindungsgemässe Anordnung wird eine sehr leichte und doch sichere Halterung der Gasflaschen geschaffen, wobei durch den rinnenförmigen Querschnitt einerseits eine Versteifung des Verbindungsstückes erzielt wird, anderseits erreicht wird, daß die Verbindungsleitungen in der Rinne laufen können und dadurch geschützt sind. Es ist dabei vorteilhaft, wenn die Rinne des Verbindungsstückes samt den darin verlaufenden Verbindungsleitungen durch eine Platte abgedeckt ist.

Eine einfache Halterung der Verspannungen am Fahrzeug wird erreicht, wenn die Verspannungen längs quer zur Fahrzeugachse verlaufenden Trägern über daran befestigte Bolzen od. dgl. geführt sind. Zum Schutz der Verspannungen ist es dabei vorteilhaft, wenn diese Verspannungen innerhalb der als Hohlprofile ausgebildeten Träger verlaufen.

Ein weiterer Nachteil bekannter Einrichtungen ist, daß nach der Entleerung des Gases aus den Flaschen in diesen oft Wasser verbleibt. Dies wird nach einem weiteren Merkmal der Erfindung dadurch vermieden, daß die Gasflaschen mit ihren Füll- bzw. Auslaßöffnungen nach unten auf einer rinnenförmigen Auflage stehen. Bei einer solchen erfindungsgemässen Einrichtung ist zufolge der nach unten ragenden Auslaßöffnungen der Flaschen eine Entleerung auch des Wassers möglich.

Zur Erzielung einer hohen Steifigkeit der Auflage ist es zweckmässig, wenn diese aus einem gewellten Blech, U-Trägern od. dgl. besteht.

Zur weiteren zusätzlichen Befestigung der Gasflaschen können die Bündel durch Seile gegenüber der Auflage und/oder dem Lastfahrzeug verspannt sein.

Nachstehend ist die Erfindung an Hand von in den Zeichnungen dargestellten Ausführungsbeispielen näher beschrieben. Es zeigen :

Figur 1 die Seitenansicht eines mit einer erfindungsgemässen Einrichtung ausgestatteten Fahrzeuges,

Figur 2 einen Schnitt nach der Linie II-II in Figur 1,

Figur 3 eine Rückansicht,

Figur 4 das Detail IV nach Fig. 2,

Figur 5 eine Draufsicht entsprechend der Linie V in Fig. 4,

Figur 6 die Flaschenbefestigung an einem Verbindungsstück,

Figur 7 die Rückansicht,

Figur 8 die Seitenansicht und

Figur 9 die Draufsicht auf eine auf einem Lastfahrzeug angeordnete weitere erfindungsgemäße Einrichtung und die

Figuren 10, 11 und 12 in vergrößertem Maßstab je die Befestigung einer Gasflasche bei einer solchen Einrichtung.

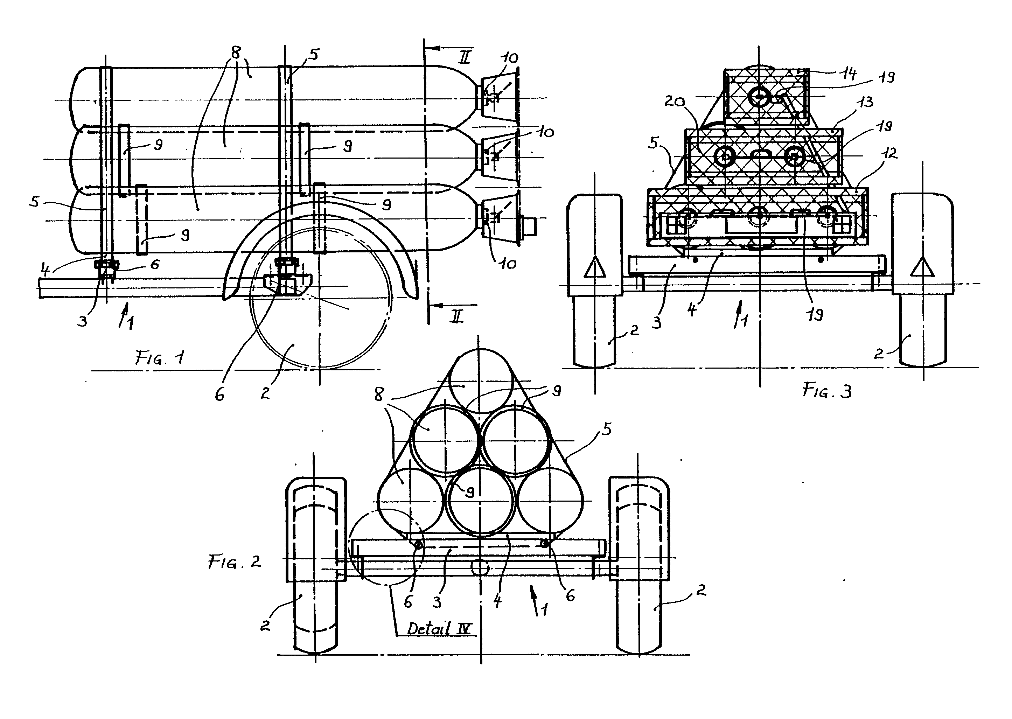

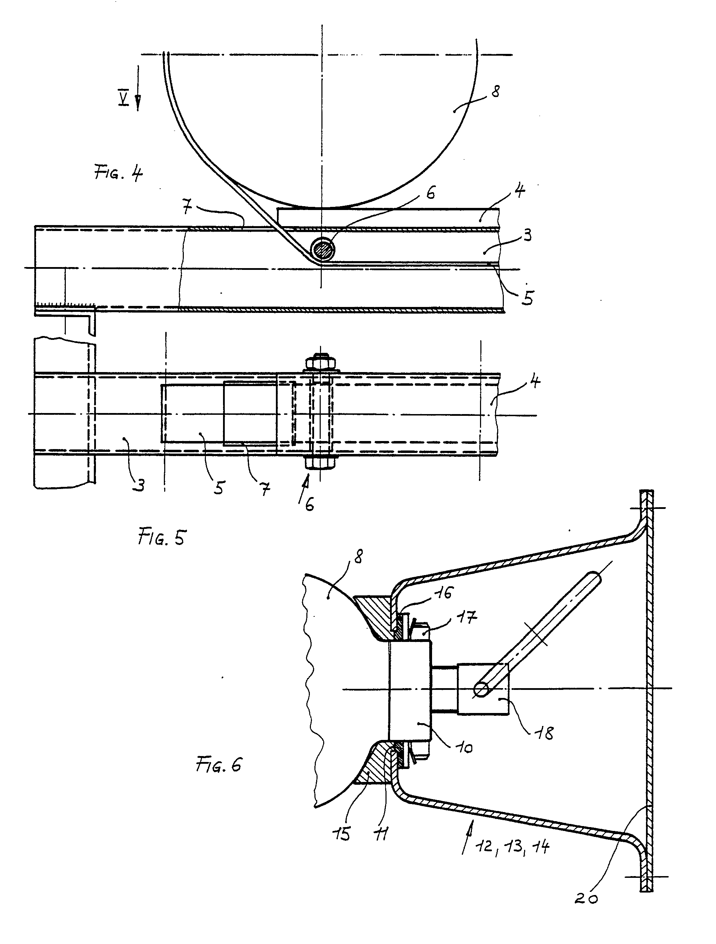

Der in den Fig. 1 bis 6 beispielsweise dargestellte Anhänger für Kraftfahrzeuge weist einen Rahmen 1 sowie Räder 2 auf. Mit dem Rahmen 1 verbunden sind Träger 3, auf denen je eine Platte 4 aufliegt. Die quer zur Längsachse des Anhängers verlaufenden Träger 3 bestehen aus Hohlprofilen und innerhalb dieser Hohlprofile verläuft ein Spannband 5, das über Bolzen 6 geführt ist. Die Träger 3 weisen Durchbrechungen 7 für den Durchtritt des Spannbandes 5 auf, das im gezeigten Beispiel über ein Bündel von sechs Gasflaschen 8 geschlungen ist, wobei sich die einzelnen Flaschen 8 über elastische Ringe 9 aneinander abstützen. Derart ist das gesamte Bündel fest mit dem Fahrzeug verbunden.

Zur zusätzlichen Befestigung sowie Sicherung der Verbindungsleitungen sind die Flaschenhälse 10 durch Öffnungen 11 eines Verbindungsstückes 12 oder 13 oder 14 gesteckt und unter Zwischenlage von Distanzscheiben 15, 16 mittels Muttern 17 befestigt. Wie aus Fig. 3 ersichtlich ist, sind die unteren drei Flaschen mittels eines Verbindungsstückes 12, die mittleren zwei Flaschen mittels eines Verbindungsstückes 13 verbunden und der obersten Flasche ist ein Verbindungsstück 14 zugeordnet. Die Verbindungsstücke besitzen einen rinnenförmigen Querschnitt, sodaß die in den Flaschenhals 8 eingeschraubten, der Füllung und Entnahme dienenden üblichen Armaturen 18 in die Rinne des entsprechenden Verbindungsstückes ragen und die diese Armaturen verbindenden Verbindungsleitungen 19 in den Vertiefungen verlaufen. Zum Schutz der Armaturen 18 und der Verbindungsleitungen 19 sind die Rinnen der Verbindungsstücke 12, 13 und 14 je durch eine Platte 20 abgedeckt.

Die Verbindungsstücke bestehen im gezeichneten Beispiel aus einem gewellten Blech, es können jedoch auch z. B. U-Träger od. dgl. verwendet werden.

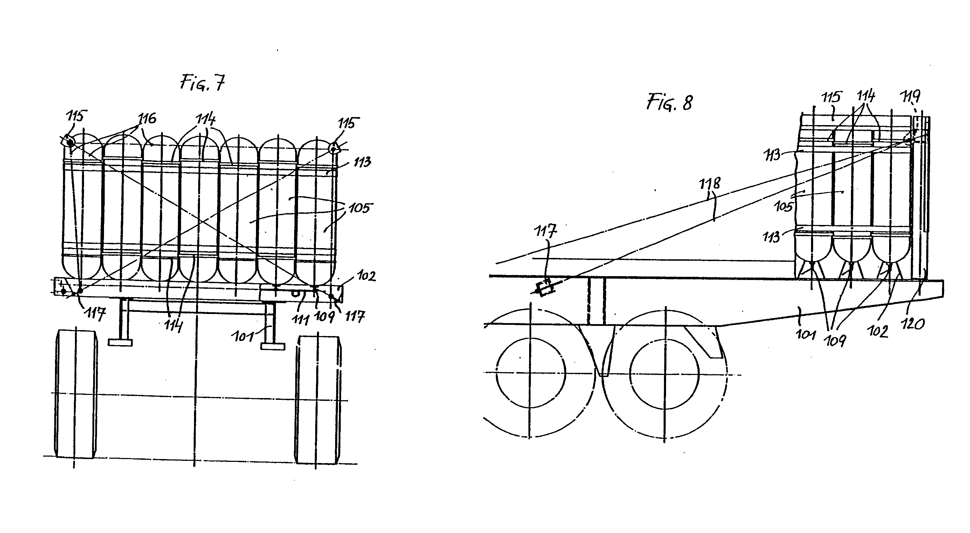

Gemäß den Fig. 7 bis 10 ist auf dem Rahmen 101 eines Lastfahrzeuges ein gewelltes Blech 102 aufgelegt und insbesondere durch (nicht dargestellte) Schrauben befestigt. Als Material für dieses Blech hat sich zufolge seines geringen Eigengewichtes insbesondere Leichtmetall als zweckmäßig erwiesen.

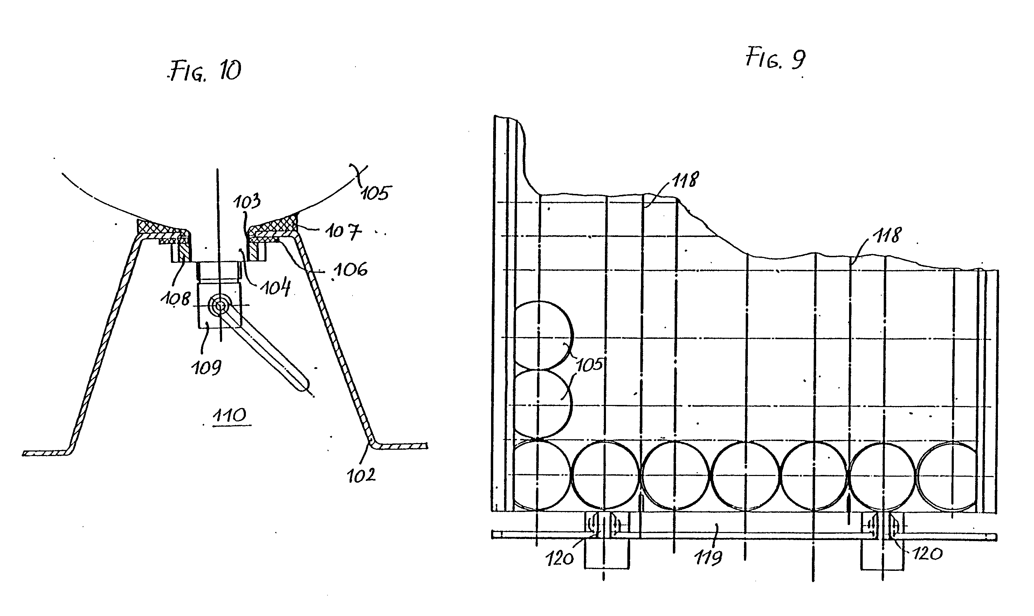

Wie insbesondere aus Fig. 10 im Zusammenhang mit den übrigen Figuren ersichtlich ist, ist das Blech 102 mit Öffnungen 103 versehen, durch die die Hälse 104 von Gasflaschen 105 gesteckt und unter Zwischenlage von elastischen Scheiben 106, 107 mittels Muttern 108 befestigt sind. Die in den Flaschenhals 104 eingeschraubten, der Füllung und Entnahme dienenden üblichen Armaturen 109 ragen somit in die nach unten offenen Wellungen 110 des Bleches 102 und die diese Armaturen verbindenden Verbindungsleitungen 111 (Fig. 7) verlaufen in den Wellungen 110.

Ein Bündel von Flaschen 105, im Beispiel 7 × 7 = 49 Flaschen, sind durch Spannbänder 113 miteinander verspannt. Die mit elastischen Ringen 114 versehenen Flaschen 105 eines Bündels 112 werden daher zu einem einheitlichen Paket.

Zur zusätzlichen Sicherung werden über die beiden seitlichen Flaschen (Fig. 7) Auflageprofile 115 gelegt und diese mittels Seilen 116 gegenüber dem Blech 102 verspannt. Die Seile 116 laufen hiezu durch bzw. zu Spannschrauben 117.

Als weitere Sicherung ist im gezeigten Ausführungsbeispiel eine Verspannung gegenüber dem Rahmen 101 gezeigt. Hierzu verlaufen Seile 118 zu einem Balken 119, der auf Stehern 120 angeordnet ist. Von der anderen Seite der Seile 118 sind diese wieder über Spannschrauben 117 am Rahmen 101 festgelegt.

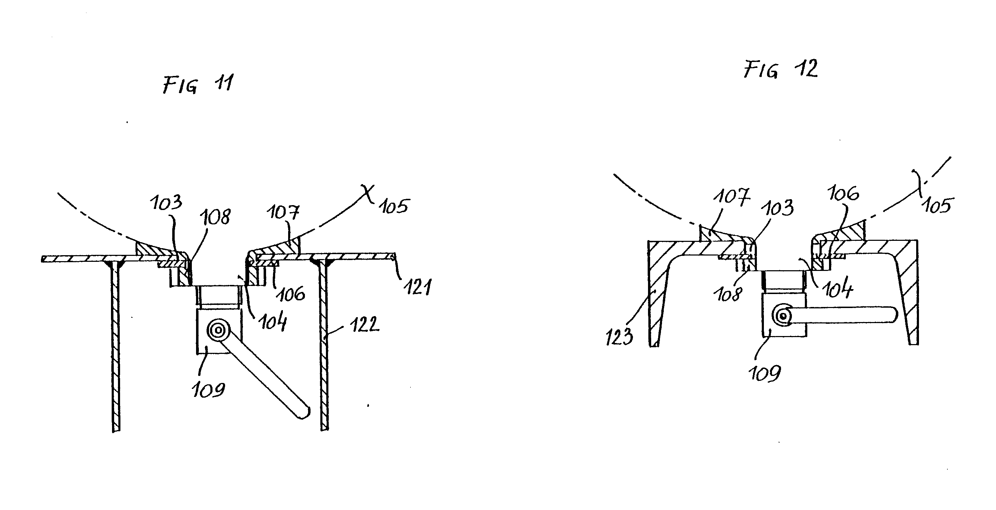

Beim Ausführungsbeispiel nach Fig. 11 dient als Auflage ein mit Verstärkungsstegen 122 verschweißtes ebenes Blech 121, beim Ausführungsbeispiel nach Fig. 12 ist als Auflage ein U-Träger 123 vorgesehen.

Im Rahmen der Erfindung sind zahlreiche Abänderungen möglich. So könnte z. B. die Befestigung der Flaschenhälse statt über Muttern z. B. über Keile od. dgl. erfolgen. Die Verspannung der Flaschenbündel könnte anders ausgeführt sein.

## Patentansprüche

1. Einrichtung zum Transport von Gasflaschen (8, 105) auf Lastfahrzeugen, bei der die Gasflaschen zu mindestens einem Bündel zusammengefaßt sind sowie die Füll- bzw. Auslaßöffnungen der Gasflaschen (8, 105) über Verbindungsleitungen verbunden sind, dadurch gekennzeichnet, daß die Flaschen des Bündels mittels umlaufenden flexiblen Spannorganen (5, 113) verspannt sind und daß die Flaschenhälse (10, 104) durch Öffnungen (11, 103) eines mehreren Flaschen (8, 105) zugeordneten Verbindungsstückes (12, 13, 14, 102, 123) mit rinnenförmigem Querschnitt ragen und durch Muttern (17, 108), Keile od. dgl. in der Rinne bzw. den Rinnen befestigt sind.

2. Einrichtung nach Anspruch 1, dadurch gekennzeichnet, daß die Rinne des Verbindungsstückes (12, 13, 14) samt den darin verlaufenden Verbindungsleitungen (19) durch eine Platte (20) abgedeckt ist.

3. Einrichtung nach Anspruch 1 oder 2, dadurch gekennzeichnet, daß die Verspannungen (5) längs quer zur Fahrzeugachse verlaufenden Trägern (3) über daran befestigte Bolzen (6) od. dgl. geführt sind.

4. Einrichtung nach Anspruch 3, dadurch gekennzeichnet, daß die Verspannungen (5) innerhalb der als Hohlprofile ausgebildeten Träger (3) verlaufen.

5. Einrichtung nach Anspruch 1, dadurch gekennzeichnet, daß die Gasflaschen (105) mit ihren Füll- bzw. Auslaßöffnungen (109) nach unten auf einer rinnenförmigen Auflage (102 ; 121, 122 ; 123) stehen.

6. Einrichtung nach Anspruch 5, dadurch gekennzeichnet, daß die Auflage aus einem gewellten Blech (102), U-Trägern (123) od. dgl. besteht.

7. Einrichtung nach Anspruch 5 oder 6, dadurch gekennzeichnet, daß die Bündel (112) durch Seile, (116, 118) gegenüber der Auflage (102 ; 121, 122 ; 123) und/oder dem Lastfahrzeug (101) verspannt sind.

## Claims

1. Device, destined for the transport of gas bottles (8, 105) by lorry, the gas bottles being tied together to form at least one bundle and the filling ports and outlets of the gas bottles (8, 105) being connected via junction tubes, characterised in that the bottles forming the bundles are rigged together by means of flexible rigging devices (5, 113) around the bundle, and that the bottlenecks (10, 104) point through the orifices (11, 103) of a connecting piece (12, 13, 14, 102, 123) for several bottles (8, 105), equipped with a groove-shaped cross-section ; the bottlenecks being fastened to the groove or groove by means of nuts (17, 108), wedges or similar devices.

2. Device according to claim 1, characterised in that the groove of the connecting piece (12, 13, 14) is covered with a plate (20) together with the junction tubes inside it (19).

3. Device according to claims 1 or 2, characerised in that the riggings (5) are mounted along beams (3), which are traced transversally to the car axle, via bolts (6) or similar devices fastened to the beams.

4. Device according to claim 3, characterised in that the riggings (5) are mounted inside the hollow section beams (3).

5. Device according to claim 1, characterised in that the gas bottles (105) stand on a groove-shaped support (102 ; 121, 122 ; 123) with their filling ports and outlets (109) pointing downwards.

6. Device according to claim 5, characterised in that the support is made of corrugated sheet-metal (102), U-beams (123) or similar materials.

7. Device according to claims 5 or 6, characerised in that the bundles (112) are rigged together with the support (102 ; 121, 122 ; 123) and/or the lorry (101) by means of ropes (116, 118).

## Revendications

1. Dispositif destiné pour le transport de bouteilles à gaz (8, 105) sur des camions ; les bouteilles à gaz liées ensemble pour former au moins un paquet et les orifices de charge et d'échappement des bouteilles à gaz (8, 105) raccordés par des conduites de jointure, caractérisé en ce que les bouteilles du paquet sont haubanées à l'aide des dispositifs de haubanage flexibles (5, 113), s'entortillant autour des bouteilles, et que les cols de bouteille (10, 104) saillissent des orifices (11, 103) d'une pièce de raccord (12, 13, 14, 102, 123) avec une coupe transversale cannelée et destinée pour plusieurs bouteilles (8, 105) et sont attachés à la cannelure ou les cannelures par des écrous (17, 108), des clavettes ou autres dispositifs semblables.

2. Dispositif selon revendication 1, caractérisé en ce que la cannelure du raccord (12, 13, 14) est couverte par une plaque (20) ensemble avec les conduites de jointure (19) tracées dedans.

3. Dispositif selon revendications 1 ou 2, caractérisé en ce que les dispositifs de haubanage (5) sont tracés le long des poutres (3) montées transversalement à l'essieu du camion par des chevilles (6) attachées aux poutres ou par autres dispositifs semblables.

4. Dispositif selon revendication 3, caractérisé en ce que les dispositifs de haubanage (5) sont tracés dans les poutres (3) qui sont développées en forme d'un profil creux.

5. Dispositif selon revendication 1, caractérisé en ce que les bouteilles à gaz (105) son arrangées sur un support en forme de cannelure (102 ; 121, 122 ; 123) de telle façon que les orifices de charge et d'échappement (109) montrent vers le bas.

6. Dispositif selon revendication 5, caractérisé en ce que le support est fait de tôle ondulée (102), des poutres en U (123) ou autres dispositifs semblables.

7. Dispositif selon revendications 5 ou 6, caractérisé en ce que les paquets (112) sont attachés au support (102 ; 121, 122 ; 123) et/ou au camion (101) par des câbles (116, 118).

FIG. 1

FIG. 2

Detail IV

FIG. 3

0 138 799

FIG. 4

FIG. 5

FIG. 6

Fig. 7

Fig. 8

0 138 799

FIG. 10

FIG. 9

0 138 799

FIG 11

FIG 12

0 138 799